# EUROPEAN PATENT APPLICATION

(11) **EP 4 450 364 A1**
(43) Date of publication of application: **23.10.2024**
(21) Application number: 22907109.7
(22) Date of filing: 15.11.2022
(51) Int. Cl.: B61L 25/04, B60L 3/00, B61L 23/00

(54) **TRAIN CONTROL SYSTEM AND TRAIN CONTROL METHOD**

(30) Priority: 16.12.2021 JP 2021203982
(71) Applicant: Hitachi, Ltd., Tokyo 100-8280 (JP)
(72) Inventor: MAEKAWA, Keiji, Tokyo 100-8280 (JP); SATO, Kiwamu, Tokyo 100-8280 (JP)
(74) Representative: Mewburn Ellis LLP
(86) International application number: PCT/JP2022/042327
(87) International publication number: WO 2023/112578

(57) **Abstract**

In order to achieve a train control system which determines whether deterioration in performance of a sensor for obstacle detection is temporarily deterioration and allowable from the viewpoint of ensuring safety of train travel or is not negligible from the viewpoint of safety, and enables safety and stable operation, provided is a train control system including, in a train, one or more sensors, and an on-board control device including a database in which types of one or more ground installation objects existing along a travel path of a train, positions of the ground installation objects, and weights set for the ground installation objects are recorded, wherein the sensors detect a ground installation object, and the on-board control device collates the ground installation object detected by the sensors with the ground installation objects recorded in the database, determines that a ground installation object that exists on the database but cannot be detected by the sensors is an undetected ground installation object, calculates a weight for the undetected ground installation object based on information of the database, and determines that the sensors are abnormal in a case where, when one undetected ground installation object is determined, the calculated weight becomes a predetermined value or more and in a case where, when a plurality of undetected ground installation objects are determined, a sum of the calculated weights for each of the undetected ground installation objects becomes a predetermined value or more.

## Description

### Technical Field

The present invention relates to a train control system and a train control method, and is particularly suitable when a sensor is used for obstacle detection.

### Background Art

In recent years, the research has been conducted on automatic operation in existing track transport systems because of concerns about human resource shortage due to aging of operators, reduction in operation costs, and the like.

In a track transport system in which a transport vehicle travels on a track, when there is an obstacle on the track, it is difficult to avoid the obstacle by steering. Therefore, it is important to detect an obstacle on the track in order to improve safety and operability of the track transport system. However, currently, the operator visually detects obstacles on the track and on the route.

On the other hand, in order to perform unmanned operation, a mechanism for automatically detecting an obstacle on a route is required, and methods using a sensor such as a millimeter wave radar, a laser radar, and a camera have been studied. The detection of an obstacle depends on the performance of the sensor, and there is a problem that an obstacle cannot be detected when some abnormality occurs in the sensor and the sensor cannot work sufficiently according to the performance.

Therefore, in order to ensure safety of train travel, it is necessary to detect abnormality of the sensor. As a technique for detecting abnormality of a sensor, for example, PTL 1 discloses a configuration that includes a database in which an installation position and an installation identifier of a ground installation object are recorded, calculates a detection distance for guaranteeing accuracy as accuracy guarantee performance of a sensor by specifying the installation identifier from sensor information including information detected by the sensor and referring to the database, and determines a failure of the sensor using the calculated detection distance.

### Citation List

### Patent Literature

PTL 1: JP 2021-069162 A

### Summary of Invention

### Technical Problem

In the unmanned operation, when some abnormality occurs in the sensor and the obstacle cannot be detected, it is necessary to stop the train because the safety of the train travel cannot be guaranteed.

On the other hand, since the actual performance of the sensor can vary depending on the surrounding environment (weather, brightness, surrounding structures, etc.), it is assumed that the performance temporarily deteriorates even if there is no abnormality in the sensor, and the temporary deterioration in performance is determined as the abnormality of the sensor.

If such a temporary deterioration in the performance of the sensor due to the surrounding environment is determined to be a sensor abnormality and the train is stopped, the train stop may occur frequently, and there is a possibility that stable operation of the train cannot be realized.

In the technique described in PTL 1, in a case where a detected distance for temporarily guaranteeing accuracy changes due to the influence of the surrounding environment, there is a possibility that such a state is determined as abnormality of the sensor.

Therefore, an object of the present invention is to provide a technique for constructing a train control system that, in a case where deterioration in performance of a sensor is detected, determines whether the deterioration in performance is a temporary deterioration in performance, and an allowable deterioration in performance from the viewpoint of ensuring safety of train travel or a non-negligible deterioration in performance for safety, and enables both ensuring safety and stable operation.

### Solution to Problem

In order to solve the above problem, one of the representative train control systems of the present invention including, in a train: one or more sensors; and an on-board control device including a database in which types of one or more ground installation objects existing along a travel path of a train, positions of the ground installation objects, and weights set for the ground installation objects are recorded, wherein the sensors detect a ground installation object, and the on-board control device collates the ground installation object detected by the sensors with the ground installation objects recorded in the database, determines that a ground installation object that exists on the database but cannot be detected by the sensors is an undetected ground installation object, calculates a weight for the undetected ground installation object based on information of the database, and determines that the sensors are abnormal in a case where, when one undetected ground installation object is determined, the calculated weight becomes a predetermined value or more and in a case where, when a plurality of undetected ground installation objects are determined, a sum of the calculated weights for each of the undetected ground installation objects becomes a predetermined value or more.

### Advantageous Effects of Invention

According to the present invention, in the case of a temporary deterioration in performance of a sensor due to the influence of the surrounding environment, the weight of each detection object is set such that the sum of the weights is equal to or less than a certain value, whereby it is possible to prevent the temporary deterioration in performance from being determined as an abnormality of the sensor, and to realize a stable train operation.

Problems, configurations, and effects other than those described above will be clarified by the following description of embodiments for carrying out the invention.

### Brief Description of Drawings

[FIG. 1] FIG. 1 is a diagram illustrating an outline of a train control system according to an embodiment of the present invention.
[FIG. 2] FIG. 2 is a diagram illustrating an example of a configuration of an on-board control device.
[FIG. 3] FIG. 3 is a diagram illustrating an example of a structure of data stored in a detection object DB.
[FIG. 4] FIG. 4 is a diagram illustrating an example of the detection object DB in a case where a rail shape is used as a detection object.
[FIG. 5] FIG. 5 is a diagram illustrating an example of a flowchart of processing for sensor abnormality detection by a sensor abnormality determination unit.

### Description of Embodiments

Hereinafter, embodiments of the present invention will be described with reference to the drawings. Note that the present invention is not limited by the embodiments.

### First embodiment

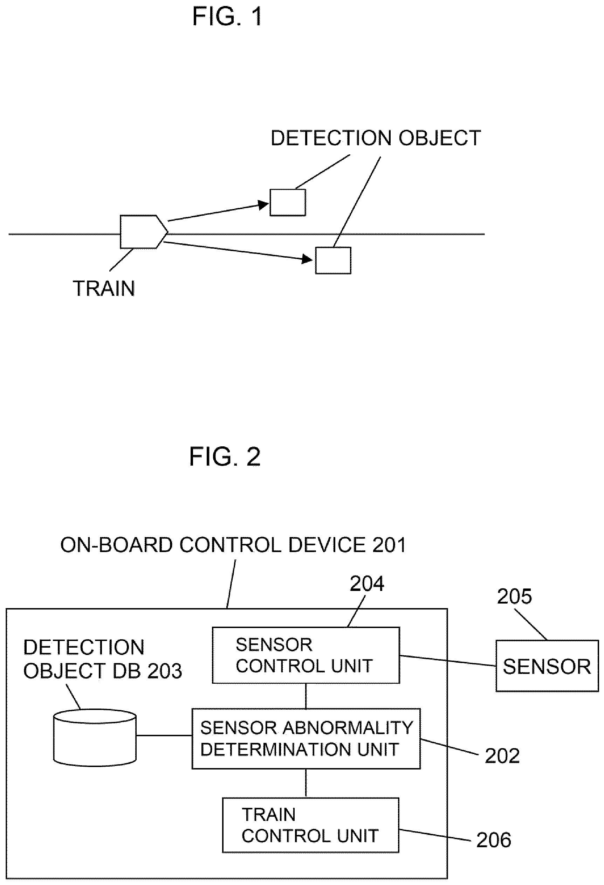

FIG. 1 is a diagram illustrating an outline of a train control system according to the embodiment of the present invention.

FIG. 2 is a diagram illustrating an example of a configuration of an on-board control device 201 mounted on a train 101, which is a structural element of the train control system according to the embodiment.

An operation mode of the on-board control device 201 illustrated in FIG. 2 will be described with reference to FIG. 1.

The train 101 includes the on-board control device 201 and a sensor 205.

The sensor 205 is used to detect a detection object 102 along the train travel path. The detection of the detection object 102 is performed by a sensor control unit 204. Here, the sensor 205 is assumed to be an image capturing device such as a camera, but may be a sensor using a millimeter wave radar, a laser radar, or the like.

A detection object DB 203 is a database that stores a list of detection objects 102 that can be detected at a position of the train 101 with respect to the position of the train 101.

In a case where a plurality of sensors 205 are mounted and an abnormality is detected by each sensor, the detection object DB 203 may be created separately for each sensor.

On the other hand, the abnormality of the sensors may be comprehensively determined using the state in which the detection object 102 is detected in the configuration in which the plurality of sensors are combined. In this case, even if the plurality of sensors are used, one type of the detection object DB 203 may be used.

A sensor abnormality determination unit 202 receives a position of train from a train control unit 206, refers to the detection object DB 203 at the received position of train, and obtains a list of the detection objects 102 that can be detected at the current position.

The sensor abnormality determination unit 202 compares the list obtained from the detection object DB 203 with the detected detection object 102 which is an output from the sensor control unit 204. According to this comparison, in a case where the detected detection object 102 is insufficient, the insufficient detection object 102 is determined as an undetected detection object, and in a case where the undetected detection object satisfies an abnormality determination condition, the sensor abnormality is determined.

That is, the sensor abnormality determination unit 202 determines a sensor abnormality based on the data stored in the detection object DB 203.

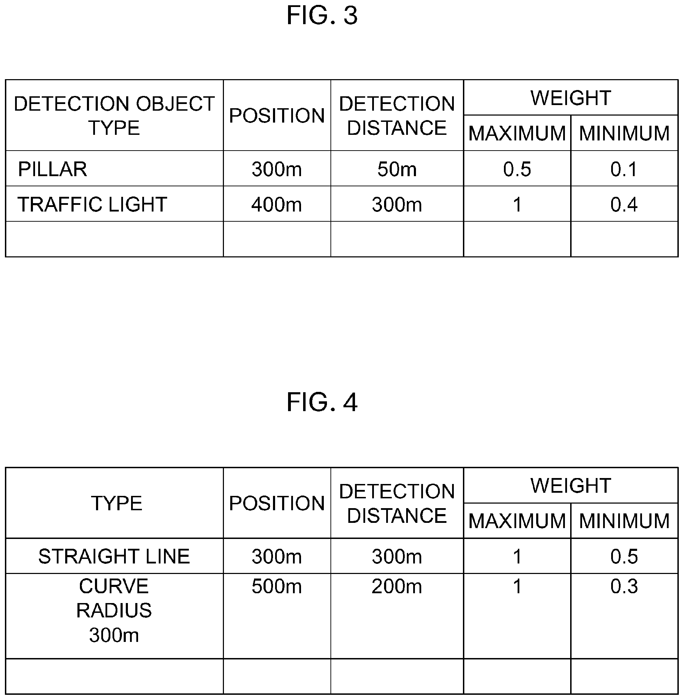

FIG. 3 is a diagram illustrating an example of a structure of data stored in the detection object DB 203.

Since detectable detection objects 102 are assumed to be different between the inbound and outbound of the train, the detection object DB 203 is created for each of the inbound and outbound of the train. Here, FIG. 3 shows an example of the detection object DB 203 in the case of the outbound of the train.

The detection object DB 203 has data of a position, a detection distance, and a weight for each type of the detection object 102.

The position indicates a kilometrage from a base point of the position where the detection object 102 exists. The detection distance indicates a distance at which the detection object 102 can be detected from the position of the train. Therefore, for example, the detectable range of a "pillar" illustrated in FIG. 3 is about 250 m to 300 m in kilometrage.

The weight is set for each detection object 102. The weight is set to include a maximum and a minimum, and varies depending on the distance to the detection object 102 in the range from the minimum to the maximum. The weight becomes the maximum when the detection object is closest. For example, in a case of the "pillar" illustrated in FIG. 3, the weight is 0.1 at a point of 250 m in kilometrage, and the weight is 0.5 at a point of 300 m in kilometrage. In addition, the values between the maximum and the minimum may be interpolated according to characteristics of the sensor 205, and for example, linear interpolation may be performed according to the distance.

The weight is determined by a detection rate of each detection object 102 in each sensor, and in a case where the detection rate is high, the weight is also set to be large. By setting the weight in this manner, in a case where the detection rate is low, even if there is no abnormality in the sensor 205 or even if the detection object 102 is overlooked due to the influence of the surrounding environment, it is not immediately determined as a sensor abnormality, and it is possible to improve the stability of train operation.

Furthermore, the weight may be determined by an importance level of the detection object 102 with respect to the safety of train travel. For example, since a "traffic light" illustrated in FIG. 3 is important for safety of train travel, the weight may be set to be large. In a case where the weight of the detection object 102 is set constant regardless of the distance, the maximum value and the minimum value of the weight may be set to the same value.

Note that, in FIG. 3, the "pillar" and the "traffic light" are described as examples of the type of the detection object 102, but it is also assumed that, for example, an "instrument box", a "station platform", or the like is adopted.

The sensor abnormality determination unit 202 refers to the detection object DB 203, compares the detection objects 102 that can be detected at the current position with the detection objects 102 detected by the sensor control unit 204, and extracts an undetected detection object 102 that cannot be detected by the sensor control unit 204.

Therefore, the sensor abnormality determination unit 202 calculates each of the weights of the extracted undetected detection objects 102, and adds the calculated weights to calculate an abnormality detection index. As a result, when the abnormality detection index becomes one or more, it is determined that the sensor is abnormal. For example, in a case where both the "pillar" and the "traffic light" illustrated in FIG. 3 cannot be detected at a point of 300 m in kilometrage, the weight of the pillar is 0.5, which is the maximum, and the weight of the traffic light is 0.8 when linear interpolation is performed. Since the sum of the weights is 1.3, it is determined that the sensor is abnormal. If either one of them is detected, it is not determined that the sensor is abnormal.

Further, the sensor abnormality determination unit 202 accumulates abnormality detection indexes in time series. In a case where the undetected detection object 102 exists, and the train passes through the position of the undetected detection object 102, the detection object 102 does not exist in front of the train, and thus, is not determined as the undetected detection object 102. However, from the viewpoint of determining a sensor abnormality, the fact that the detection object 102 has not been detected should be considered as a weight.

Therefore, the sensor abnormality determination unit 202 does not reset the abnormality detection index every cycle, and in a case where a detection object 102 in the detection object DB 203 is newly detected, the sensor abnormality determination unit 202 resets the abnormality detection index to zero since it is possible to determine that the sensor is normal because the new detection object 102 is detected.

As a result, in a case where the train passes through the position of the undetected detection object 102 which has not been detected, the abnormality detection index is not reset, and the maximum weight of the undetected detection object 102 remains in the abnormality detection index. For example, it is assumed that a plurality of detection objects 102 having the same condition as the "pillars" illustrated in FIG. 3 exist at positions separated from each other, in a case where two pillars cannot be detected continuously, the abnormality detection index is one, and thus it is determined that the sensor is abnormal. However, if a state in which one pillar is detected and the next pillar cannot be detected is repeated, the abnormality detection index is reset to zero every time the pillar is detected. Therefore, the abnormality detection index finally becomes 0.5 which is for one pillar, and thus it is not determined as a sensor abnormality.

In a case where there are a plurality of sensors 205 and abnormalities of these sensors 205 are individually determined, the abnormality detection index is calculated for each sensor.

On the other hand, a rail on the track may be used as the detection object 102 which can be always detected. In this case, the rail shape data is stored in the detection object DB 203, and it is determined whether the detected rail shape matches the rail shape in the detection object DB 203.

In this case, the structure of the detection object DB 203 can be the same as the structure illustrated in FIG. 3. A change point of the rail shape, that is, a change point between a straight line and a curve may be set as a position, a detection distance at which the change point can be detected may be set, and a weight may be set using a detection rate of each rail shape.

FIG. 4 is a diagram illustrating an example of the detection object DB 203 in a case where the rail shape is set as a detection object.

For example, FIG. 4 illustrates that the straight section of the rail is 300 m to 500 m in kilometrage, and it can be detected that the rail shape is straight from a point 300 mbefore entering the straight section. After entering the straight section beyond the position of 300 m in kilometrage, the maximum weight is applied for the recognition of the straight line because it is within the section. Here, the weight of each rail shape may be determined by the detection rate of the rail shape. For example, for a curve with a small radius, the weight may be set large since it is easily recognized as a curve, and the detection rate becomes high.

Further, the weight of the detection object located within the vehicle limit in front of the train in the curved section may be increased. In terms of safety, it is important to be able to detect an obstacle within the vehicle limit. Therefore, in the curved section, by using the fact that a detection object exists beside the track can be virtually detected as a detection object within the vehicle limit and increasing the weight of such a detection object located virtually within the vehicle limit, it is easy to determine that there is a sensor abnormality when the performance of detecting an obstacle within the vehicle limit is deteriorated, and safety can be improved.

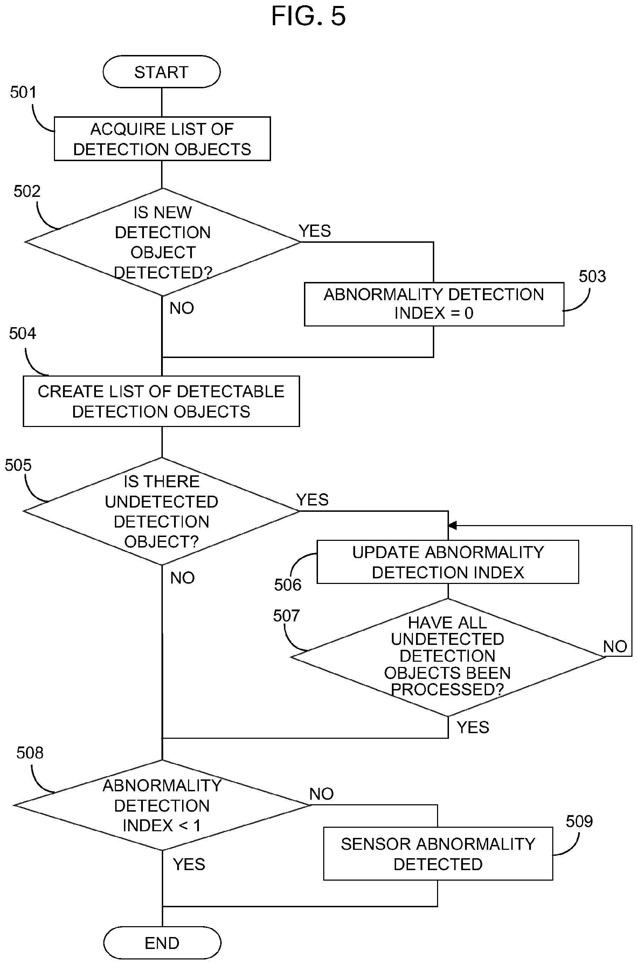

FIG. 5 is a diagram illustrating an example of a flowchart of processing for sensor abnormality detection by the sensor abnormality determination unit 202. In a case where there are a plurality of sensors 205, the flowchart illustrated in FIG. 5 is executed for each sensor.

The sensor abnormality determination unit 202 periodically executes the processing of the flowchart illustrated in FIG. 5. A processing mode of each step will be described below. The processing subject of each step is the sensor abnormality determination unit 202, but the subject notation thereof will be omitted below.

### <Step 501>

The sensor abnormality determination unit 202 acquires a list of the detection objects 102 currently detected by the sensor 205 from the sensor control unit 204.

### <Step 502>

The sensor abnormality determination unit 202 compares the list of detection objects 102 acquired in Step 501 with the list of detection objects 102 previously detected, and determines whether a new detection object 102 is detected. In a case where it is detected (Yes), the process proceeds to step 503 in order to reset the abnormality detection index. In a case where it is not detected (No), the process proceeds to step 504 since it is not necessary to reset the abnormality detection index.

### <Step 503>

Since the sensor 205 newly detects the detection object 102, the sensor abnormality determination unit 202 determines that there is no abnormality in the sensor 205 and resets the abnormality detection index to zero.

### <Step 504>

The sensor abnormality determination unit 202 refers to the detection object DB 203 using the current train position acquired from the train control unit 206, and creates a list of detection objects 102 that can be detected at the current position.

### <Step 505>

The sensor abnormality determination unit 202 compares the list of the detection objects 102 acquired in step 501 with the list of the detectable detection objects 102 created in step 504, and determines whether there is an undetected detection object 102, that is, a detection object 102 in the list of the detectable detection objects 102 but not in the list of the detection objects 102 detected by the sensor 205. In a case where it is the case (Yes), the process proceeds to step 506 in order to update the abnormality detection index for the undetected detection object 102. In a case where it is not the case (No), the process proceeds to step 508 since it is not necessary to update the abnormality detection index.

### <Step 506>

The sensor abnormality determination unit 202 updates the abnormality detection index for the undetected detection object 102. The weight of the undetected detection object 102 is calculated according to the current position of the train. In the update of the abnormality detection index, for a new detection object that has not been detected so far, that is, a detection object that is not included in the previous detectable list, the calculated weight is directly added to the abnormality detection index. For a detection object that has not been detected at the previous time as well, a difference between the weight at the previous position and the weight at the current position is calculated, and only this difference is added to the abnormality detection index.

### <Step 507>

The sensor abnormality determination unit 202 determines whether or not the abnormality detection indexes of all the detection objects 102 determined to be undetected in step 505 have been updated in step 506. In a case where there is remaining undetected detection object 102 (Yes), the processing of step 506 is executed for the detection object 102. In a case where there is no remaining undetected detection object 102 (No), the update of the abnormality detection index is completed, and the process proceeds to step 508.

### <Step 508>

The sensor abnormality determination unit 202 determines whether the abnormality detection index is smaller than one. In the case where the abnormality detection index is one or more (Yes), the processing proceeds to step 509 in order to determine that the sensor is abnormal. In the case where the abnormality detection index is smaller than one (No), it is determined that there is no sensor abnormality, and the processing ends.

### <Step 509>

It is determined that a sensor abnormality has been detected, and predetermined abnormality processing is executed. As the abnormal processing, for example, in a case where the train travel is hindered, the brake output may be performed, and in a case where the train operation can be continued, only the alarm output may be performed. That is, the content of the abnormality processing may be determined in advance in consideration of the importance of the sensor detected as the abnormality.

According to the above processing mode, it is possible to determine the abnormality of the sensor using the weight set for each detection object. In addition, by appropriately setting the weight, it is possible to prevent a temporary deterioration in performance of the sensor due to the surrounding environment from being determined as a sensor abnormality, and to realize a stable train operation.

Here, in a case where deterioration in performance of the sensor due to the surrounding environment occurs over a wide range, for example, in a case where dense fog occurs over a wide range, even if the technology of the present invention is applied, there is a possibility that it is determined that the sensor is abnormal instead of deterioration in performance due to the surrounding environment.

However, from the viewpoint of detecting an obstacle, there is no change in that the obstacle detection by the sensor cannot be safely performed. Therefore, even if the sensor abnormality is determined in such a state and the train is stopped, it can be considered that it is a measure necessary for safety. That is, in a case where the performance of the sensor deteriorates over a wide range due to the surrounding environment, the influence on the train operation is the same even if the sensor abnormality is erroneously determined, and thus, there is no problem in practical use of the present invention.

Although the embodiments according to the present invention have been described above, the present invention is not limited to the above-described embodiments, and various modifications can be made without departing from the gist of the present invention.

### Reference Signs List

- 101: train
- 102: detection object
- 201: on-board control device
- 202: sensor abnormality determination unit
- 203: detection object DB
- 204: sensor control unit
- 205: sensor
- 206: train control unit

## Claims

1. A train control system comprising, in a train:
one or more sensors; and
an on-board control device including a database in which types of one or more ground installation objects existing along a travel path of the train, positions of the ground installation objects, and weights set for the ground installation objects are recorded,
wherein the sensors detect the one or more ground installation objects, and
the on-board control device collates a ground installation object detected by the sensors with the ground installation objects recorded in the database, determines that a ground installation object that exists on the database but cannot be detected by the sensors is an undetected ground installation object, calculates a weight for the undetected ground installation object based on information of the database, and determines that the sensors are abnormal in a case where, when one undetected ground installation object is determined, the calculated weight becomes a predetermined value or more and in a case where, when a plurality of undetected ground installation objects are determined, a sum of the calculated weights for each of the undetected ground installation objects becomes a predetermined value or more.

2. The train control system according to claim 1, wherein the weights for the ground installation objects recorded in the database are set according to a detection rate of the ground installation objects.

3. The train control system according to claim 1, wherein the weights for the ground installation objects recorded in the database are set according to an importance level of the ground installation objects with respect to safety of train travel.

4. The train control system according to claim 1, wherein
the ground installation objects are rails on which the train travels,
the database records shapes of the rails which are the types, positions of change points of the shapes of the rails, and weights set for the shapes of the rails, and
the on-board control device collates a shape of a rail detected by the sensors with the shapes of the rails recorded in the database, determines a shape of a rail that exists on the database but cannot be detected by the sensors as a shape of an undetected rail, calculates a weight for the shape of the undetected rail based on information in the database, and determines that the sensors are abnormal in a case where, when one undetected rail is determined, the calculated weight becomes a predetermined value or more and in a case where, when a plurality of undetected rails are determined, a sum of the calculated weights for each of the undetected rails becomes a predetermined value or more.

5. The train control system according to claim 4, wherein the weights for the shapes of the rails recorded in the database are set according to a detection rate of shapes of the rails.

6. The train control system according to any one of claims 1 to 5, wherein the on-board control device changes the weight according to a distance from the train to the ground installation object or the change point of the shape of the rail.

7. A train control method comprising:
recording, in a database, types of one or more ground installation objects existing along a travel path of the train, positions of the ground installation objects, and weights set for the ground installation objects;
detecting, by one or more sensors mounted on the train, the ground installation objects;
collating a ground installation object detected by the sensors with the ground installation objects recorded in the database, and determining that a ground installation object that exists on the database but cannot be detected by the sensors is an undetected ground installation object; and
calculating a weight for the undetected ground installation object based on information of the database, and determining that the sensors are abnormal in a case where, when one undetected ground installation object is determined, the calculated weight becomes a predetermined value or more and in a case where, when a plurality of undetected ground installation objects are determined, a sum of the calculated weights for each of the undetected ground installation objects becomes a predetermined value or more.

8. The train control method according to claim 7, wherein
the ground installation objects are rails on which the train travels,
the method comprises:
recording in the database shapes of the rails which are the types, positions of change points of the shapes of the rails, and weights set for the shapes of the rails;
collating a shape of a rail detected by the sensors with the shapes of the rails recorded in the database;
determining a shape of a rail that exists on the database but cannot be detected by the sensors as a shape of an undetected rail; and
calculating a weight for the shape of the undetected rail based on information in the database, and determining that the sensors are abnormal in a case where, when one undetected rail is determined, the calculated weight becomes a predetermined value or more and in a case where, when a plurality of undetected rails are determined, a sum of the calculated weights for each of the undetected rails becomes a predetermined value or more.

9. The train control method according to claim 7 or 8, wherein the weight is changed according to a distance from the train to the ground installation object or the change point of the shape of the rail.
